**Europäisches Patentamt**

**European Patent Office**

**Office européen des brevets**

(19)

(11) Numéro de publication: **0 090 690**
**B1**

## FASCICULE DE BREVET EUROPÉEN

(12)

(45) Date de publication du fascicule du brevet:
**31.05.89**

(51) Int. Cl.⁴: **G 11 B 27/28**, G 11 B 7/00

(21) Numéro de dépôt: **83400465.7**

(22) Date de dépôt: **07.03.83**

(54) **Procédé et dispositif de régénération de phase de signaux de synchronisation dans un appareil optique d'écriture-lecture de support d'information.**

(30) Priorité: **12.03.82 FR 8204220**

(43) Date de publication de la demande:
**05.10.83 Bulletin 83/40**

(45) Mention de la délivrance du brevet:
**31.05.89 Bulletin 89/22**

(84) Etats contractants désignés:
**DE GB IT NL SE**

(56) Documents cité:
**EP-A-0 021 411**
**FR-A-2 261 586**
**GB-A-2 069 219**
**US-A-3 247 491**
**US-A-3 601 537**
**US-A-3 911 485**

**IBM TECHNICAL DISCLOSURE BULLETIN, vol. 23, no. 7A, décembre 1980, pages 2974-2975, New York, USA, J. Farran: "Detecting marks recorded as extended one-half wavelengths"**

(73) Titulaire: **THOMSON- CSF, 51, Esplanade du Général de Gaulle, F-92800 Puteaux (FR)**

(72) Inventeur: **Gerard, Jean- Louis, THOMSON- CSF SCPI 173, bld Haussmann, F-75379 Paris Cedex 08 (FR)**
Inventeur: **Loret, Marc, THOMSON- CSF SCPI 173, bld Haussmann, F-75379 Paris Cedex 08 (FR)**

(74) Mandataire: **Grynwald, Albert, THOMSON- CSF SCPI, F-92045 PARIS LA DEFENSE CEDEX 67 (FR)**

EP 0 090 690 B1

## Description

La présente invention se rapporte à un procédé de regénération de la phase de signaux de synchronisation utilisés dans un appareil de transcription optique de données sur un support d'information, pendant les phases d'écriture et/ou de lecture, notamment de données numériques enregistrées sur un disque. Elle concerne également un dispositif optique de mise en oeuvre de ce procédé.

Les méthodes d'enregistrement sont bien connues de l'homme de métier et sortent du cadre de la présente invention, le plus souvent ces informations sont enregistrées sous forme de microreliefs le long d'une piste ayant la configuration de spirale ou de cercles concentriques, cette dernière configuration étant la plus usitée lorsqu'il s'agit d'enregistrer des données numériques. Elle facilite notamment l'accès aléatoire à une donnée enregistrée ainsi qu'un enregistrement divisé en blocs ou secteurs.

Lors de la lecture, quelquesoit la méthode d'enregistrement, il est nécessaire de disposer de signaux permettant la synchronisation de cette lecture. Pour ce faire, de nombreuses méthodes sont également connues.

Selon une première méthode, dans les systèmes dits multipistes, à chaque piste réservée à l'enregistrement d'information utile, est associée au moins une autre piste le long de laquelle sont enregistrées divers informations et notamment des signaux d'horloge permettant la synchronisation de la lecture de l'information utile. Dans une variante de réalisation, les pistes destinées à la synchronisation sont prégravées et comportent des pertubations régulièrement espacées décelables optiquement. Lors de la lecture, dans une première variante (système multifaisceau), un premier faisceau est focalisé sur la piste d'information utile et utilisé pour lire ces informations, et un second faisceau séparé mais en relation de couplage mécanique constante avec le premier, est utilisé pour lire les informations de synchronisation. Dans une seconde variante, (système monofaisceau) un seul faisceau lit les deux informations. Dans ce cas, il est nécessaire que les deux types d'informations puissent être aisément discriminés A titre d'exemple, les spectres de fréquences associés à ces informations peuvent être différents. Dans cette variante les informations de synchronisation prégravées peuvent également être utilisées pendant la phase d'écriture. Il est connu du document GB-A-2 069 214 un support d'information correspondant à la seconde variante mentionnée ci-dessus, mais dont la lecture met en oeuvre l'exploration de la piste avec deux faisceaux dont les points d'impact sont en retrait l'un par rapport à l'autre. Il est prévu le recalage en phase d'un signal d'horloge lu par le premier faisceau avec une portion du signal lu par le second faisceau.

Pour augmenter la densité d'enregistrement possible, il a été également proposé d'utiliser une seule piste. Dans ce cas, les signaux d'horloge de synchronisation peuvent être dérivés de la lecture de l'information elle même. Pour rendre plus aisé la synchronisation, on utilise classiquement des codes dits auto-synchronisants ou a maximum de transitions, quelquesoit le contenu de l'information source à enregistrer. En effet, de façon pratique, les Microreliefs présentent deux niveaux de reférence, associés aux valeurs logiques "0" et "1" respectivement. Les signaux de synchronisation sont dérivés de la détection de la transition d'un niveau déterminé à l'autre. Cependant ce type de codage ne permet pas une densité maximale d'enregistrement. Il est également connu pour augmenter cette densité, d'utiliser des codes non auto-synchronisants par exemple le code N.R.Z. (non retour à zéro). Ce type de code a pour caractéristique de ne pas présenter de transition d'un bit d'information à l'autre si ces deux bits restent à la même valeur logique. Il est alors plus difficile de dériver de la lecture de l'information ainsi codée, les signaux nécessaires à la synchronisation. Une solution peut être trouvée à ce problème en disposant le long des pistes, régulièrement ou non, des éléments enregistrés utilisés uniquement pour la synchronisation ou drapeaux. Naturellement ces drapeaux doivent être "transparents" aux circuits électroniques chargés de détecter et de traiter les informations utiles. Ces échantillons de synchronisation servent à resynchroniser à chaque passage d'un drapeau sous une tête de lecture des circuits générateurs de signaux de synchronisation. Il est donc extrêmement important que les instants de re-synchronisation soient définis avec une grande précision, du fait que ceux-ci sont moins nombreux que dans les procédés précédemment évoqués.

Or de nombreux phénomènes peuvent être cause d'une dégradation de la qualité de la synchronisation. On peut citer par exemple les erreurs de focalisation du faisceau de lecture ainsi que les erreurs de suivi radial de piste qui se traduisent, respectivement, par des variations de la surface de la tache de lecture ou un décentrement de cette tache par rapport à l'axe moyen des pistes à suivre. Il s'ensuit des variations de la forme des signaux détectés, notamment des variations des fronts montants et descendants de ces signaux. Or pour dériver des signaux lus un signal de synchronisation, comme il a été rappelé, on utilise classiquement dans l'art connu un de ces fronts. On peut, par exemple, mettre en oeuvre un élément logique à seuil détectant la coïncidence de l'amplitude du signal lu avec ce seuil. Les variations de l'instant d'occurence de cette détection dûs aux phénomènes parasites évoqués se traduisent alors par une synchronisation incorrecte de la lecture ou de l'écriture des données.

La présente invention se fixe pour but de pallier les défauts de l'art connu, notamment de diminuer fortement l'influence des erreurs de focalisation et de suivi radial de piste sur la synchronisation de la lecture ou de l'écriture.

L'invention a donc pour objet un procédé de génération de signaux de synchronisation ($H_S$) dans un appareil optique d'enregistrement-lecture de données numériques d'informations sur un support (90) animé d'un mouvement uniforme; lesdites données étant enregistrées sous forme de perturbations (92) d'au moins une couche de matériau du support optiquement détectable le long des pistes (91) de configuration déterminée; ledit appareil comportant des moyens pour focaliser en une tache d'exploration ($t_a$) un faisceau (f) d'énergie lumineuse sur une desdites pistes et des moyens optoélectroniques (1) de détection de l'interaction de ce faisceau avec lesdites perturbations défilant sous la tache d'exploration; procédé caractérisé en ce qu'il comprend:

- une phase préliminaire consistant en l'inscription de données numériques spécifiques (92) sous forme d'une suite de perturbations de ladite couche de matériau en des sites déterminés desdites pistes sélectivement identifiable par les moyens optoélectroniques de détection (1, 2);
- et une phase de regénération desdits signaux de synchronisation comprenant les étapes suivantes:
. generation à l'extérieur du support d'un signal périodique d'horloge fréquence fixe (H);
. identification sélective des données numériques spécifiques par les moyens de détection optoélectroniques;
. détermination de l'instant ($T_C$) d'intersection du centre d'une desdites perturbations composant les données numériques spécifiques avec un axe passant par le centre (O) de la tache d'exploration et orthogonal à la direction moyenne de la piste explorée (91);
. détermination de l'amplitude et du signe du décalage de cet instant par comparaison avec un instant de référence de la période du signal d'horloge (H);
. et génération d'un signal de synchronisation ($H_S$) de même fréquence que le signal d'horloge et présentant un déphasage directement proportionnel en amplitude et signe auxdits décalages.

- L'invention a encore pour objet un dispositif de mise en oeuvre d'un tel procédé et le support d'information particulièrement adapté à ce procédé.

L'invention sera mieux comprise à l'aide de la description qui suit en référence aux figures annexées et parmi lesquelles:

- les figures 1 et 2 illustrent deux types de situations caractéristique se présentant pendant la lecture d'informations, à savoir des erreurs de focalisation et des erreurs de suivi radial;
- la figure 3 illustre deux types de codes mis en oeuvre pour le codage d'un même mot binaire;

- la figure 4 est un diagramme illustrant un code particulier mis en oeuvre dans une variante préférée de l'invention;
- la figure 5 est un diagramme synoptique d'un dispositif selon l'invention;
- les figures 6 et 7 représentent de façon plus détaillée certains éléments de ces dispositifs;
- la figure 8 est un diagramme sur lequel sont représentés les signaux les plus significatifs du fonctionnement du dispositif selon l'invention et leurs interrelations temporelles;
- la figure 9 illustre un exemple d'appareil d'enregistrement - lecture.

Les procédés d'inscription d'informations sur un disque optique sont bien connus. Habituellement le disque comporte au moins une couche, généralement superficielle, en matériau sensible à certains types de radiation. Selon un des procédés les plus connus, lors de l'inscription, on focalise un faisceau généré par une source laser sur cette couche de matériau et on crée par effet thermooptique des microreliefs le long des pistes. Ces pistes peuvent être virtuelles, c'est à dire être créées au moment de l'inscription des données, ou encore être prégravées sous quelqueforme que ce soit. Les procédés de lecture des informations et de suivi de piste sont également bien connus. On utilise généralement pour le suivi de piste, soit un second faisceau de lecture, soit le faisceau ayant servi à l'écriture ou encore le même faisceau sert pour toutes les fonctions. L'interaction de ce faisceau avec les micro-reliefs défilant sous une tête de lecture crée des ordres d'interférences qui sont détectés par des moyens optoélectroniques de détection. La lecture peut se faire, soit par transmission au travers du disque de détection à l'aide de cellules photodétectrices placées à proximité de la face inférieure du disque, soit par reflexion du rayonnement sur le disque et retour inverse de la lumière reprise par des systèmes optiques comprenant des miroirs dirigeant les faisceaux réfléchis vers des cellules photodétectrices.

Outre le suivi radial, les cellules photodétectrices peuvent être également utilisées pour assurer une focalisation correcte du faisceau de lecture sur la face enregistrée. Enfin, ces cellules sont utilisées pour générer des signaux électriques représentant l'information enregistrée.

Pour les applications dans le domaine de l'informatique, il est necessaire de pouvoir enregistrer des données de type numérique de façon aléatoire a un endroit quelconque du disque. De même lors de la lecture, l'accès aléatoire a ces informations est également requis. Une autre exigence soulevée par ce type de dispositif est que la lecture doit être synchronisée sur l'écriture. Or, pour de nombreuses raisons dûes à des phénomènes parasites tels que des fluctuations de vitesse, une horloge extérieure ne peut suffir à cette fin. Les signaux de synchronisation doivent donc être dérivés directement des données enregistrées de façon à avoir une corrélation entre les données lues et les données inscrites.

De façon pratique, les micro-reliefs qui se présentent sous forme d'altérations le long des pistes associés à deux niveaux bien définis et séparées par des transitions entre ces deux niveaux. Les zones interpistes sont des zones uniformes ayant l'un de ces niveaux selon que les microreliefs sont en creux ou en bosses. Les moyens de détection vont traduire ces variations de niveaux par une suite d'impulsions également présentant deux états qui peuvent être associées à des états logiques "0" et "1" et présentant également des transitions plus ou moins brusques entre ces deux états.

Dans l'art connu, il est d'usage de dériver des signaux de synchronisation de l'apparition d'une de ces transitions, par exemple un front montant ou un front descendant. Une synchronisation correcte suppose que l'instant d'apparition de ces fronts montants ou descendants, puisse être définis avec suffisamment de précision et ne fluctue pas dans le temps. Or, dûes aux erreurs de focalisation et de suivi radial de piste, cette condition n'est pas satisfaite dans la pratique.

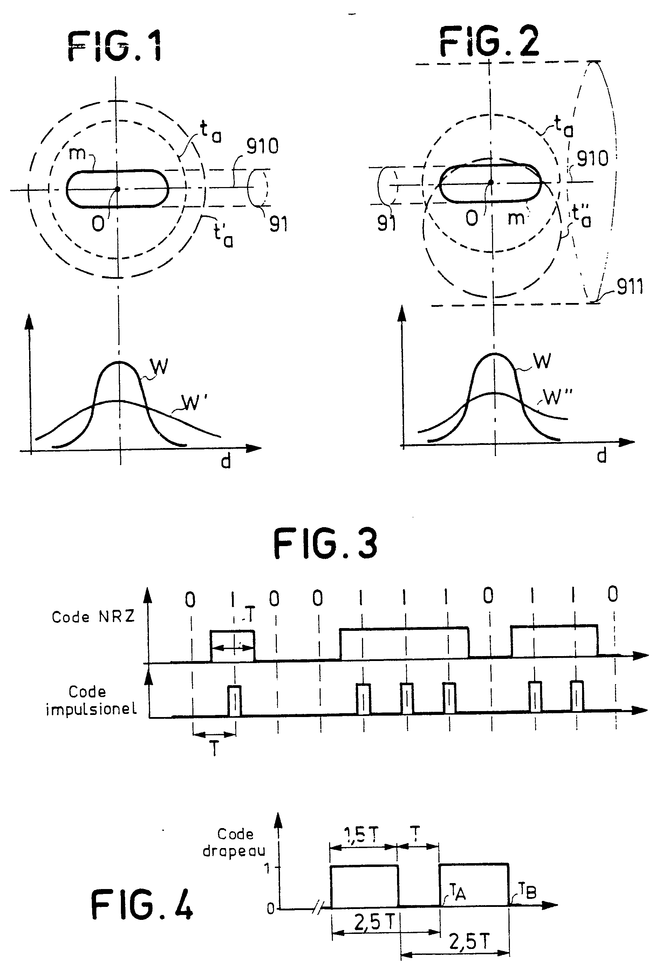

La figure 1 illustre l'effet des erreurs de focalisation. Sur cette figure est illustré schématiquement un micro-relief m représentant une donnée numérique élémentaire enregistrée le long d'une piste 91 d'axe moyen 910. En général le micro-relief présente une symétrie par rapport à cet axe. On a représenté sur la même figure l'impact de la tache de lecture $t_a$ lorsque le faisceau est correctement focalisé. On a supposé, ce qui est généralement le cas, que la tache présente une symétrie de révolution de centre O, ce point O étant confondu à l'instant représenté sur la figure avec le centre de symétrie du micro-relief m. Il doit être bien entendu que la tache et le micro-relief sont animés d'un mouvement relatif du fait de la rotation du disque. Sur la partie inférieure de la figure, la courbe W représente la convolution de la tache $t_a$ avec le micro-relief. Cette courbe est homotétique à la distribution de l'énergie diffractée par la tache en fonction de la distance au point O, et également à la courbe de l'énergie captée par un détecteur ponctuel en fonction du temps lorsque le micro-relief entrainé par la rotation du disque défile sous la tache de lecture.

Lorsqu'il y a défocalisation, la tache de lecture acquiert une plus grande surface. Ce cas est illustré par le motif sous la référence $t'_a$ La courbe de convolution correspondante est w'. L'enveloppe de cette courbe est beaucoup plus large que l'enveloppe de la courbe w.

La figure 2 illustre pour sa part l'influence de l'erreur de suivi radial. Il a été représenté également deux taches: $t_a$, correctement centrée sous l'axe moyen de la piste 81, et une tache $t''_a$ décentré par rapport à cet axe moyen. Les courbes de convolution correspondantes sont respectivement w et w''. On constate également que l'enveloppe de la courbe w'' est plus large et de moindre amplitude que celle de la courbe w.

Cependant les courbes w, w' et w'' présentent une caractéristique intéressante, à savoir que toutes ces courbes ont le même axe de symétrie. Il en est de même des signaux électriques fournis par les moyens de détection en réponse à l'interaction des taches de lecture avec le défilement des micro-reliefs. L'instant de passage des centres du micro-relief sous la tache de lecture et le centre de l'impulsion de lecture générée par les moyens de photodétections restent confondus, ce à condition que la tache et le micro-relief présentent une symétrie de révolution au moins selon un axe. La tache peut être de forme ellipsoïdale, par exemple, comme c'est le cas lorsqu'on utilise un laser semiconducteur.

L'invention tire avantage de cette propriété et propose un procédé permettant une synchronisation invariante avec le facteur de forme. Selon la caractéristique principale de l'invention, les impulsions nécessaires à définir une synchronisation lors de la lecture ou de l'écriture d'information numérique ont générées en synchronisme avec le passage du centre de symétrie de micro-reliefs sous une tête de lecture; ces micro-reliefs pouvant être spécifiques, c'est-à-dire enregistrés aux seules fins de la génération d'impulsions de synchronisation ou encore être constitué par les informations numériques enregistrées.

Comme il a été rappelé, les informations numériques peuvent être enregistrées de façon codées suivant des règles diverses. Une première série de codes sont dits auto-synchronisants ou du moins présentent le maximum de transitions. Pour augmenter la densité d'enregistrement, il est d'usage d'utiliser d'autres types de codes comme par exemple, le code dit N.R.Z. (non-retour à zéro).

La figure 3 illustre deux types de codes: le code impulsionnel et le code N.R.Z., ce pour un mot binaire arbitraire présentant les états logiques suivants 0 1 0 0 1 1 1 0 1 1 0. On réalise immédiatement, au vu de la figure 3, que le code impulsionnel présente beaucoup plus de transition que le code de type N.R.Z.. Il sera alors plus difficile de dériver de ce dernier des informations pour la synchronisation. Sur la figure, la période T représente la durée d'un signal binaire élémentaire ou bit qui correspond a une fréquence de rhytme f = 1/T.

Bien que l'invention ne soit pas limitée à cette seule variante, dans le cas ou l'on utilise un code du type N.R.Z. ou analogue, on mettra en oeuvre de préférence des enregistrements spécifiques ou drapeaux utilisés aux seules fins de la génération de signaux de synchronisation. Ces drapeaux peuvent être inscrits préalablement à toute inscription d'informations utiles et ont alors utilisés pour la génération de signaux de synchronisation lors de l'inscription de ces informations et lors des lectures successives; ou encore sont multiplexées en temps avec l'inscription de ces informations et sont utilisés lors de la lecture ultérieure de celles-ci.

Dans ces deux cas, il est nécessaire que ces informations spécifiques soient sélectivement identifiables par les moyens de lecture de manière à générer des signaux de synchronisation uniquement corrélés à l'apparition de ces drapeaux spécifiques et au contraire "transparent" lors de la lecture des informations utiles.

Pour ce faire, si on utilise un code du type N.R.Z. on enregistre des drapeaux spécifiques sous forme d'impulsions dont les intervalles de temps séparant des fronts de même nature sont interdite dans le code de modulation. Pour le code N.R.Z. les durées T et multiples entiers de T sont utilisées. On choisi pour les impulsions spécifiques enregistrées une durée égale à la plus petite durée, demi-entière utilisable c'est à dire 1,5 T.

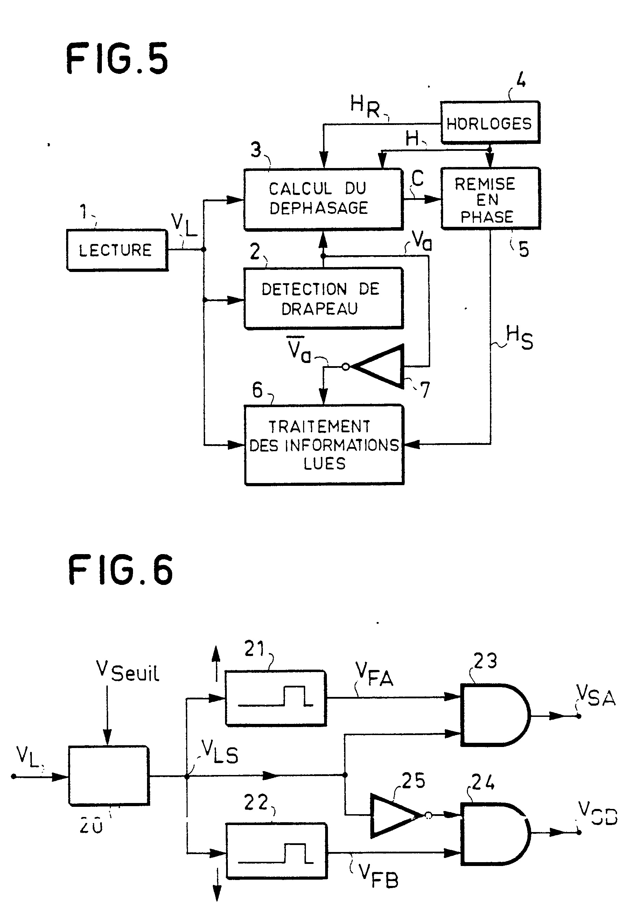

Une telle impulsion est illustrée par le diagramme de la figure 4. Une première partie est au "1" logique pendant l'intervalle de temps égal à 1,5 T et au "0" logique pendant l'intervalle de temps égal à T. Le procédé de l'invention selon une variante préférée va maintenant être décrit de façon plus détaillé à l'aide du dispositif représenté par le diagramme synoptique de la figure 5. Les organes optoélectroniques de détection et les circuits électroniques associés 1 fournissent un signal de lecture $V_L$ transmis d'une part à des circuits classiques de traitement de l'information lue 6 et, d'autre part, aux circuits spécifiques de la présente invention.

Selon le procédé de l'invention, il est tout d'abord nécessaire de déterminer si les signaux $V_L$ sont issus de la lecture d'informations utiles ou au contraire de la lecture de drapeaux destinés à la synchronisation. Cette étape est réalisée à l'aide de circuits de détection de drapeaux 2 qui seront détaillés ultérieurement. Ces circuits fournissent un signal d'autorisation $V_A$ transmis à des signaux de calcul dedéphasage 3. Ces circuits, selon la caractéristique fondamentale de l'invention, ont pour but de fournir des informations C représentatives de l'instant ou il y a coïncidence entre les centres de la tache optique et du micro-relief défilant sous cette tache. Le signal d'autorisation $V_A$, par exemple après inversion logique $\bar{V}_A$ par l'inverseur 7, peut être utilisé à des fins d'inhibition-autorisation de fonctionnement des circuits de traitement des informations lues 6.

Le dispositif comporte également des circuits d'horloge 4 générant des impulsions de synchronisation H regénérées par des circuits 5, c'est-a-dire remis en phase et transmis sous forme d'un signal re-synchronisé $H_S$ aux circuits de traitement de l'information lue. Des circuits d'horloges fournissent également au circuit de calcul de déphasage 3 des signaux d'horloge de référence $H_R$ et les signaux H. De façon classique, ces circuits d'horloges comprennent un oscillateur piloté par quartz présentant une grande stabilité.

De façon préférentielle, l'identification des drapeaux ainsi que la génération de l'information nécessaire à la détermination de la coïncidence entre le passage du centre des micro-reliefs et le centre optique de la tache de lecture peut s'effectuer à l'aide d'un circuit unique qui effectue la double détection des fronts montants et descendants de deux impulsions successives composant un drapeau.

Un tel circuit est illustré par la figure 6. Ce circuit comprend un premier circuit 20 de mise en forme du signal lu $V_L$. Il peut être constitué de façon avantageuse par un élément bistable comparant un signal lu $V_L$ à une tension de seuil $V_{SEUIL}$ fournissant une impulsion $V_{LS}$ par exemple à un état logique "1" lorsque le signal lu dépasse le seuil et à l'état "0" dans le cas contraire. Ce signal $V_{LS}$ est transmis à deux circuits 21 et 22 destinés à générer deux signaux impulsionnels définisant des fenêtres de temps.

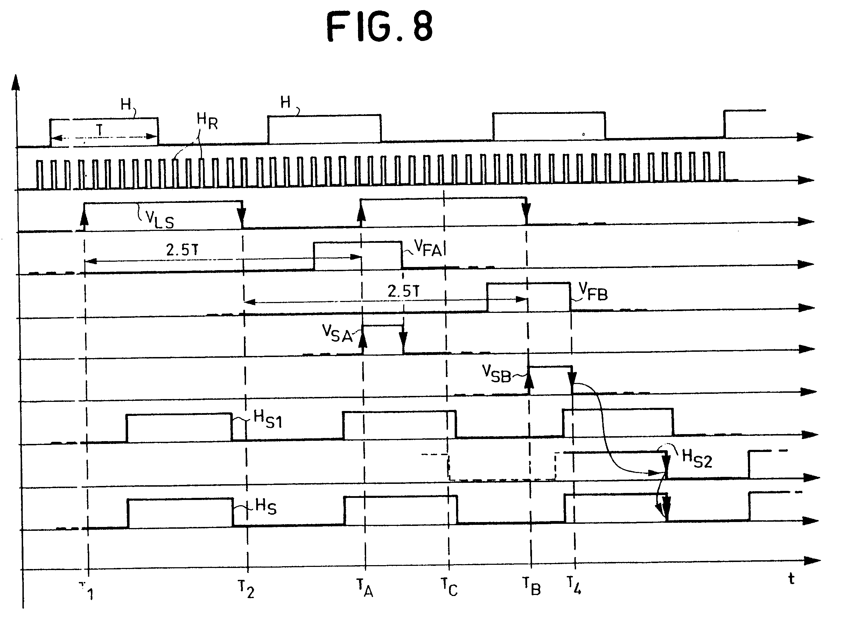

Ces signaux sont illustrés par le diagramme de la figure 8. La courbe H représente des impulsions fournies par l'horloge 4 de durée de base T. Le signal impulsionnel $V_{LS}$ peut présenter un déphasage par rapport aux signaux d'horloges quelconque modulo la période de ces signaux. Du fait de la propriété d'invariance rappelée précédemment, la période de temps séparant deux fronts de même nature, montant ou descendant, est également invariante au premier ordre avec le facteur de forme. Elle est donc égale à 2,5 T.

Le premier circuit, 21, est déclenché par le front montant de la première impulsion de drapeau, à l'instant $T_1$ sur le diagramme, et délivre une impulsion $V_{FA}$ dans dont le centre est retardé de 2,5 T. Le second circuit, 22, est déclenché par le premier front descendant, à l'instant $T_2$, et délivre également une impulsion définissant une fenêtre de temps $V_{FB}$ décalée de la même valeur. Les circuits de la figure 6 comprennent également deux portes "ET" 23 et 24 recevant sur une première entrée respectivement des signaux $V_{FA}$ et $V_{FB}$ et sur une seconde entrée respectivement le signal $V_{LS}$ et ce même signal inversé par l'inverseur logique 25. Sur les sorties des circuits logiques "ET" 23 et 24 sont disponibles les signaux $V_{SA}$ et $V_{SB}$ dont les fronts de montée respectifs coïncident avec le front montant et le front descendant de la seconde impulsion de drapeau, c'est-à-dire avec les instants $T_A$ et $T_B$. En règlant correctement la durée des fenêtres de temps $V_{FA}$ et $V_{FB}$, l'état les portes "ET" 23 et 24 ne délivre des impulsions que lorsqu'il y a lecture d'un code associé au drapeau. Dans le cas contraire, ces sorties resteront à l'état "0" logique. La première fonction, d'identification des drapeaux, est donc réalisée.

Les informations concernant les temps $T_A$ et $T_B$ permettent de déterminer la moyenne de ces deux temps, $T_C$, représentant le centre de la seconde impulsion de drapeau. Le signal d'autorisation du type de celui illustré sur la figure 5: $V_A$, peut être dérivé du signal $V_{SB}$.

Les circuits 21 et 22 peuvent être réalisés à partir chacun de deux monostables délivrant des impulsions déclenchées respectivement par les fronts montant et descendant et de durée un peu supérieure et un peu inférieure à l'intervalle de temps 2,5 T. L'intersection logique de ces deux impulsions peut être utilisée pour déterminer la fenêtre de temps.

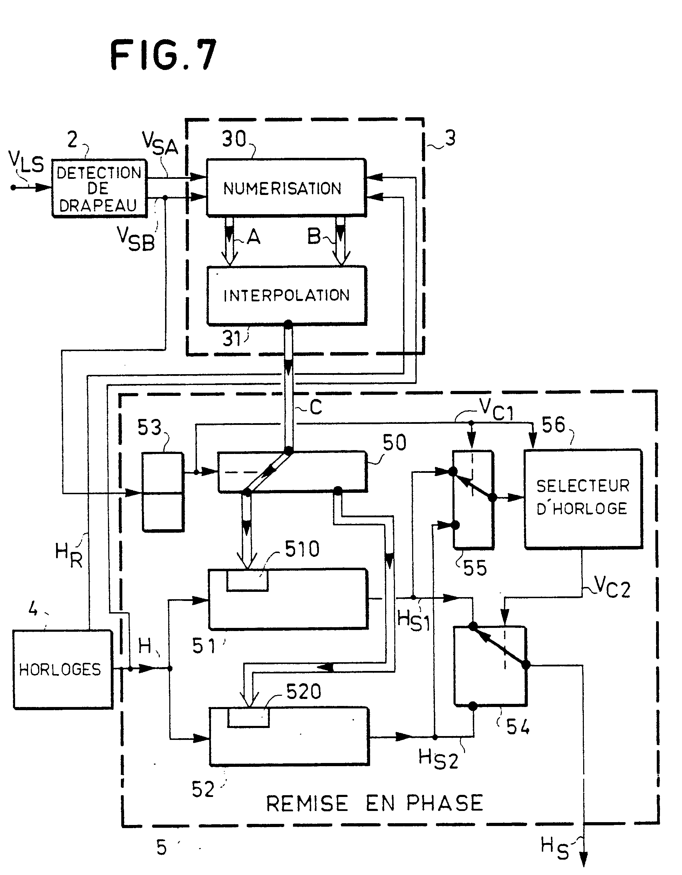

La figure 7 illustre de façon plus détaillée les autres circuits du dispositifs de la figure 5. Les signaux impultionnels $V_{SA}$ et $V_{SB}$ sont transmis à un circuit de numérisation 30 fournissant des mots binaires A et B représentant le décalage des fronts de montée de ces signaux par rapport à un instant de référence. Pour ce faire, on utilise le signal d'horloge H et un signal d'horloge $H_R$ de fréquence multiple de la fréquence de répétition du signal d'horloge de base H et en relation de phase fixe avec ce signal. Le second signal d'horloge peut être dérivé de façon aisée du signal H à l'aide d'un multiplicateur de fréquence. A titre d'exemple, sur le diagramme de la figure 8, le signal d'horloge $H_R$ a une fréquence de répétition seize fois plus grande que celle du signal H. Il définit donc seize sous-intervalles. Un circuit décodeur peut fournir deux mots binaires A et B représentant le décalage des instants $T_A$ et $T_B$ par rapport à un instant de référence fixe de la période du signal d'horloge de base H, ce modulo seize. Un circuit d'interpolation 31 peut associer à chaque couple A et B un mot binaire C représentatif du décalage du centre $T_C$ de la seconde impulsion de drapeau, par référence au même instant de référence de la période du signal d'horloge de base H. Ces circuits d'interpolation peuvent être réalisés de façon avantageuse à l'aide d'une mémoire de type à lecture seule programmable (P.R.O.M.).

Cette donnée sert à la remise en phase, à chaque passage de drapeau, du signal d'horloge utilise comme signal de synchronisation $H_S$. Ce signal peut servir, soit lors de la lecture d'informations numériques entre le passage de deux drapeaux, soit, lorsque ces drapeaux sont inscrits préalablement à l'enregistrement de données sous forme de prégravures, également pour l'écriture de ces données.

Les nouveaux signaux d'horloge regénérés doivent être en relation de phase constante avec le passage sous la tache de lecture du centre du microrelief m, c'est-à-dire avec l'instant $T_C$ centre de la seconde impulsion du drapeau tel qu'il vient d'être déterminé. Les signaux de synchronisation $H_S$ ont même fréquence que les signaux d'horloge H et une relation de phase dépendant de la valeur du mot de commande C. Ce mot de commande C est mémorisé pendant l'intervalle de temps s'écoulant entre le passage de deux drapeaux successifs.

Après calcul d'une nouvelle valeur de commande C, il est nécessaire, dans la plupart des applications, que la remise en phase des signaux de synchronisation $H_S$ ne se fassent pas de façon aléatoire. Dans une variante préférée de réalisation de l'invention, on génère un nouveau signal de synchronisation présentant avec le signal d'horloge H un décalage de phase déterminé par la nouvelle valeur de C calculée. On substitue ce nouveau signal à l'ancien comme signal de synchronisation à un instant bien déterminé. Ce peut être par exemple, l'apparition du premier front descendant des nouveaux signaux d'horloge. Pour ce faire, à titre d'exemple non limitatif, on peut utiliser deux circuits distincts de génération de signaux d'horloge de synchronisation, dont les sorties respectives $H_{S1}$ et $H_{S2}$ sont utilisées alternativement après chaque détection de drapeau comme signaux de synchronisation $H_S$. Chacun de ces circuits, 51 et 52, peut comprendre par exemple une ligne à retard programmable ou un oscillateur à boucle de rétroaction à verrouillage de phase commandées par le mot binaire C. Ils comprennent en outre, chacun, un registre, 510 et 520, destiné à enregistrer ce mot de commande C. Un commutateur à deux positions 50 aiguille alternativement ce mot de commande vers ces registres au rythme des passages des drapeaux et des calculs des valeurs C. A chaque détection des drapeaux, par exemple sur le front montant du signal $V_{SB}$, un circuit 53, du type bistable, fournit un signal de commande $V_{C1}$ au commutateur 50. Ce signal est également transmis à un second commutateur 55 recevant sur deux entrées les signaux d'horloge $H_{S1}$ et $H_{S2}$ transmis alternativement à un sélecteur d'horloge 56. Ce circuit sélecteur reçoit sur une entrée le signal de commande $V_{C1}$ et transmet ce signal à un troisieme commutateur 54 sous forme d'un signal de commande $V_{C2}$ lors de la détection du premier front descendant de l'horloge $H_{S1}$ ou $H_{S2}$ qui lui est transmis par le commutateur 55 et qui suit la transition du signal de commande $V_{C1}$. Ce sélecteur peut être réalisé à l'aide d'une bascule de type JK. Le signal de commande $V_{C2}$ commande l'aiguillage du commutateur 54 et connecte alternativement les sorties des circuits 51 et 52 à la liaison véhiculant les signaux de synchronisation $H_S$.

Le diagramme de la figure illustre dans sa partie inférieure le fonctionnement des circuits qui viennent d'être décrits. A l'instant $T_B$, si on néglige le temps nécessaire à l'interpolation, une valeur de C est disponible sur la sortie des circuits interpolation 31. Si on suppose que les signaux de synchronisation courants $H_S$ sont fournis par la sortie des circuits 51 : $H_{S1}$, à l'instant $T_4$, lors de la retombée du signal $V_{SB}$, la nouvelle valeur de C est transmise au registre 520 et les signaux d'horloge $H_{S2}$ ont remis en phase conformément à cette nouvelle valeur C. La substitution des anciens signaux d'horloge $H_{S1}$ par les nouveaux signaux d'horloge $H_{S2}$ s'effectuent à l'instant $T_5$ coïncidant avec le premier front descendant de ces nouvelles impulsions d'horloge. Le commutateur 54 relie alors la liaison véhiculant les signaux $H_S$ à la sortie des circuits 52. Les signaux d'horloge $H_{S2}$ serviront de signaux de synchronisation jusqu'à la prochaine détection du passage d'un drapeau sous la tache de lecture $t_a$ et calcul d'une nouvelle valeur de C selon le processus qui vient d'être décrit.

Il doit bien être entendu que les commutateurs 50, 54, et 55 sont réalisés à partir de circuits électroniques, par exemple des portes logiques "OU EXCLUSIF" recevant sur une première série d'entrées les signaux à aiguiller et sur une seconde série d'entrées les signaux de commande $V_{C1}$ ou $V_{C2}$.

La présente invention peut être mise en oeuvre dans de nombreux appareils écriture-lecture par voie optique de support d'information. Elle est compatible avec les procédés dérivant les signaux de synchronisation à partir des informations enregistrées ou des procédés mettant en oeuvre des drapeaux spécifiques, ces derniers pouvant être enregistrés en des sites prédéterminés des pistes, régulièrement espacés ou non. Dans une variante de réalisation particulière, comme il a été rappelé, ces drapeaux peuvent être prégravés et servir à la génération de signaux de synchronisation lors de l'enregistrement de données numériques ultérieures. Le procédé de l'invention permet donc une grande souplesse d'utilisation.

Dans certaines applications, le suivi radial de piste s'effectue également à l'aide de drapeaux dissiminés le long des pistes. Il peut également en être de même en ce qui concerne la focalisation. Dans ce cas le procédé de l'invention rend plus aisé ces techniques. En effet, comme il a été rappelé en référence aux figures 1 et 2, le procédé permet une grande tolérance vis à vis des erreurs de focalisation et des erreurs de suivi radial. Si on se reporte à nouveau à la figure 2, la zone de détectabilité des drapeaux définit une piste fictive 911 de l'ordre de grandeur du double du diamètre de la tache de lecture $t_a$. Si les zones de détectabilité de deux pistes jointives se chevauchent, la synchronisation peut être rendue complètement indépendante du suivi radial de piste. Ceci peut être utilisé avantageusement pour les phases de saut d'une piste à l'autre, les deux pistes pouvant ne pas être jointives. Ce type d'opération est réalisé pour une recherche aléatoire d'une information. Pendant ces phases de sauts de pistes, la synchronisation peut donc être maintenue bien qu'il n'y ai plus de suivi radial de piste. En effet, le disque continuant à tourner, la tache de lecture rencontrera des drapeaux destinés à la re-synchronisation, ces drapeaux appartenant à des pistes différentes lors de l'intersection des pistes par la trajectoire de la tache de lecture.

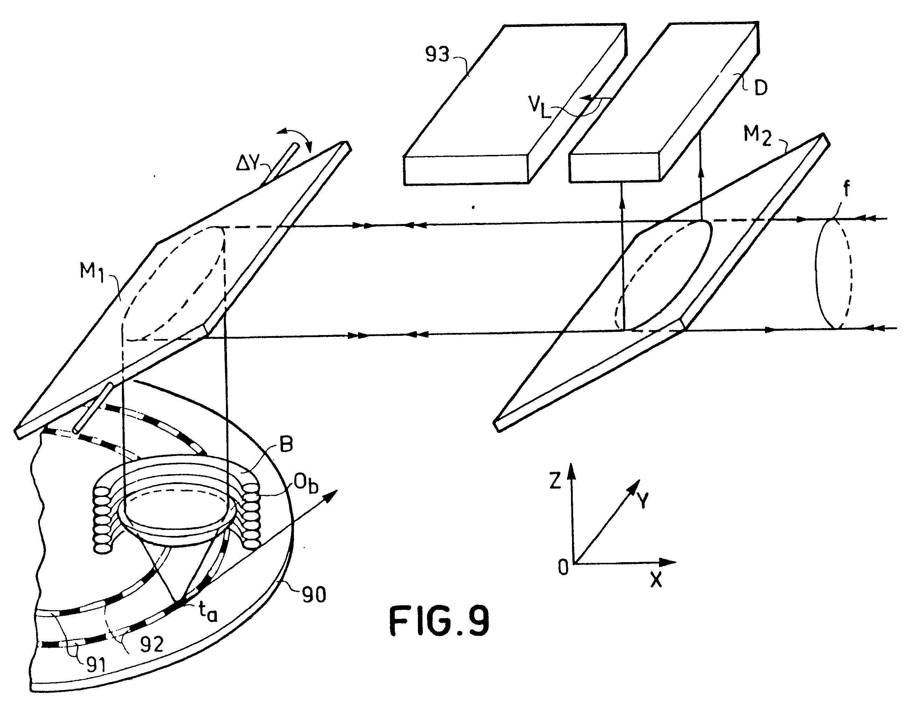

La figure 9 illustre pour fixer les idées, de façon schématique, un exemple d'appareil d'enregistrement-lecture sur un support par voie optique dans lequel le procédé de la présente invention peut être mis en oeuvre. Un disque 90 tournant dans un plan X ou Y autour d'un axe parallèle au troisième axe du trièdre de référence XYZ comporte sur sa face supérieure une couche de matériau thermo-sensible dans laquelle des informations ont été enregistrées le long des pistes 91. Ces pistes comportent également des drapeaux 92 associés à un code spécifique conformément à ce qui a été décrit. Le disque, d'un diamètre d'environ 30 cm, est animé d'un mouvement de rotation communiqué par un moteur d'entrainement solidaire du chassis du système optique d'enregistrement-lecture. De façon typique, les pistes au nombre par exemple de 40 000 sont inscrites à l'intérieur d'une couronne centrée sur l'axe de rotation et de largeur égale à environ 8 cm. Le nombre de drapeaux inscrits par pistes circulaires concentriques doit être suffisant pour s'affranchir de phénomènes parasites liés à la nature du support ou à la fluctuation de la vitesse de rotation. Typiquement on inscrit 3 500 drapeaux par pistes, compte-tenu des données précédentes.

Dans l'exemple de réalisation illustré par la figure 9, le dispositif d'accès à une piste prédéterminée du disque comprend une partie fixe comportant une source d'énergie (non-représentée) générant un faisceau de rayons parallèles f et une partie mobile constituée par la tête d'enregistrement-lecture proprement dite. Comme il est connu, cette dernière comprend un objectif du type microscope $O_b$, solidaire d'une bobine électromagnétique B se déplaçant dans le champ magnétique d'un aimant permanent (non-représenté) assurant l'asservissement vertical ou focalisation et un miroir galvanométrique $M_1$ assurant l'asservissement radial. Le miroir galvanométrique $M_1$ est mobile autour d'un axe $\Delta_y$ parallèle à l'axe $O_Y$ du trièdre de référence de manière à assurer ledit asservissement radial. Le faisceau f est focalisé dans une $t_a$ en un endroit déterminé du disque sur une des pistes 91 précitées. On suppose ici que le système est du type monofaisceau-monopiste, c'est-à-dire système dans le faisceau unique f sert alternativement à l'écriture et à la lecture ainsi que pour assurer les fonctions de suivi radial de piste et de focalisation. Cet aspect sort du cadre de l'invention.

Pour détecter le faisceau de lecture réfléchi par le disque, on interpose, par exemple, une lame semi-transparente $M_2$ sur le trajet du faisceau unique f. Le faisceau réfléchi par le disque est alors détecté par des moyens photodétecteurs D qui génèrent le signal $V_L$ à des circuits 93 de traitement de ce signal. Ces circuits comprennent notamment des circuits propres à l'invention, par exemple le dispositif décrit en relation avec la figure 7.

L'invention est également compatible avec les appareils d'enregistrement-lecture mettant en oeuvre plus d'un faisceau, par exemple un faisceau de lecture et un faisceau d'écriture.

## Revendications

1. Procédé de regénération de signaux de synchronisation ($H_S$) dans un appareil optique d'enregistrement-lecture de données numériques d'informations sur un support (90) animé d'un mouvement uniforme; lesdites données étant enregistrées sous forme de perturbations (92) d'au moins une couche de matériau du support optiquement détectable le long des pistes (91) de configuration déterminée; ledit appareil comportant des moyens pour focaliser en une tache d'exploration $(t_a)$ un faisceau (f) d'énergie lumineuse sur une desdites pistes et des moyens optoélectroniques (1) de détection de l'interaction; de ce faisceau avec lesdites perturbations défilant sous la tache d'exploration procédé caractérisé en ce qu'il comprend:

- une phase préliminaire consistant en l'inscription de données numériques spécifiques (92) sous forme d'une suite de perturbations de ladite couche de matériau en des sites déterminés desdites pistes sélectivement identifiable par les moyens optoélectroniques de détection (1, 2);
- et une phase de regénération desdits signaux de synchronisation comprenant les étapes suivantes:
. genération à l'extérieur du support d'un signal périodique d'horloge à fréquence fixe (H);
. identification sélective des données numeriques spécifiques par les moyens de détection optoélectroniques;
. détermination de l'instant $(T_c)$ d'intersection du centre d'une desdites perturbations composant les données numériques spécifiques avec un axe passant par le centre (O) de la tache d'exploration et orthogonal à la direction moyenne de la piste explorée (91);
. détermination de l'amplitude et du signe du décalage de cet instant par comparaison avec un instant de référence de la période du signal d'horloge (H);
. et génération d'un signal de synchronisation (HS) de même fréquence que le signal d'horloge et présentant un déphasage directement proportionnel en amplitude et signe auxdits décalages.

2. Procédé selon la revendication 1, caractérisé en ce que les données numériques à enregistrer sont des impulsions binaires codées conformément aux règles du code N.R.Z. et en ce que, lesdites impulsions ayant des durées exclusivement égales à une valeur les élémentaire T ou à un multiple entier de cette valeur, les données numériques spécifiques sont constituées d'une suite d'impulsions (Fig.4) d'une durée égale à une fois et demi cette valeur séparées par des intervalles de temps égaux à cette valeur T de manière à permettre ladite étape d'identification sélective.

3. Procédé selon la revendication 2, caractérisé en ce que l'étape de détermination de l'instant d'intersection est réalisé par détection de l'instant d'occurence de transitions successives $(T_A, T_B)$ de sens opposés d'une des impulsions des données numériques spécifiques et calcul de la moyenne $(T_C)$ entre ces deux instants.

4. Procédé selon la revendication 2, caractérisé en ce que l'étape d'identification et de détermination de l'instant d'intersection sont confondus en une étape unique et en ce qu'il est réalisé une double détection de l'instant d'occurence de deux transitions successives d'un premier sens et de deux transitions successives d'un second sens par génération de première $(V_{FA})$ et seconde fenêtres $(V_{FB})$ de temps initialisées par les premières transitions des premier et second sens et retardées d'un intervalle de temps égal à une fois et demi ladite valeur élémentaire déterminée T, génération de deux impulsions $V_{SA}$, $V_{SB}$) en synchronisme avec les secondes transitions des premier et second sens, la génération étant conditionnée à la coïncidence de l'occurence des transitions à l'intérieur desdites fenêtres de temps et détermination de l'instant d'intersection à partir du calcul de la moyenne (Tc) des instants $(T_A, T_B)$ d'occurence de ces deux impulsions.

5. Procédé selon l'une quelconque des revendications 1 à 4, caractérisé en ce que le signal de synchronisation $(H_S)$ étant du type impulsionnel, l'étape de regénération du signal de synchronisation s'effectue par la génération d'un nouveau signal de synchronisation $(H_{S2})$ à chaque nouvelle phase de regénération présentant un déphasage directement proportionnel en amplitude et en signe au nouveau décalage déterminé pendant cette phase et substitution au signal de synchronisation $(H_{S1})$ généré pendant la phase précédente en synchronisme avec l'instant $(T_4)$ d'apparition de la prochaine transition de sens déterminé desdites impulsions du nouveau signal de syncnronisation $(H_{S2})$

6. Procédé selon l'une quelconque des revendications 1 à 5, caractérisé en ce que l'inscription pendant la phase preulinaire des données numériques spécifiques s'effectue préalablement à l'inscription de toutes données numériques d'information sur ledit support et en ce que lesdits signaux de synchronisation regénérés $(H_S)$ sont utilisés dans des phases ultérieures, pour l'écriture et la lecture synchronisées de ces données numériques d'information.

7. Procédé selon l'une quelconque des revendications 1 à 5, caractérisé en ce que l'inscription pendant la phase préliminaire des données numériques spécifiques est multiplexée en temps avec l'inscription des données numeriques d'information et en ce que les dits signaux de synchronisation regénérés $(H_S)$ sont utilisés dans des phases ultérieures pour la lecture synchronisée de ces informations.

8. Procédé selon l'une quelconque des revendications 1 à 7, caractérisé en ce que lesdites données numériques spécifiques sont inscrites en des sites (92) régulièrement espacés le long des pistes (91) définissant entre ces sites des blocs réservés à l'inscription des données numériques d'information.

9. Dispositif de regénération de signaux de synchronisation selon l'une quelconque des revendications 1 à 8, comprenant des moyens (4) de génération à l'extérieur du support de syncnronisation, d'un signal périodique de référence et de signaux d'horloge à partir desquels sont générés lesdits signaux de synchronisation, et au moins des moyens optoélectroniques de lecture d'un support d'information (90) sur lequel sont enregistrées le long de piste (91) des données numériques d'information composées d'impulsions (92) de durée égale à un intervalle de temps déterminé T ou multiple entier de cet intervalle ainsi que des données numériques spécifiques de durée égale à une fois et demi la durée T séparées par des intervalles de temps égal à cette durée; caractérisé en ce qu'il comprend des moyens (2) de détection sélective desdites impulsions spécifiques, des moyens de détermination du déphasage (3) du milieu d'une des impulsions composant les données spécifiques par comparaison avec un instant de référence de la période dudit signal d'horloge (H) générant un signal de commande (C) représentatif du signe et de l'amplitude de déphasage et des moyens de remise en phase (5) des signaux d'horloge (H) de manière à regénérer lesdits signaux de synchronisation (H$_S$).

10. Dispositif selon la revendication 9 caractérisé en ce que les données numériques spécifiques (Fig.4) comprenant au moins deux impulsions, les moyens (2) de détection sélective de données numériques spécifiques et les moyens (3) de détermination de déphasage comprennent en commun un double détecteur des transitions de ces impulsions recevant les signaux de sortie (V$_L$) desdits moyens optoélectroniques de lecture et comportant un élément logique (25) inversant lesdits signaux, un premier générateur (21) de fenêtre de temps (V$_{FA}$) initialisé par la première transition d'un premier sens desdites impulsions composant les données numériques spécifiques et retardée d'un intervalle de temps égal à une fois et demie de ladite durée élémentaire déterminée T, un second générateur (22) de fenêtres de temps (V$_{FB}$) initialisé par la première transition de sens inverse desdites impulsions composant les données numériques spécifiques et retardée du même intervalle de temps, des première (23) et seconde (24) portes logiques "ET" recevant sur une première série d'entrées les signaux de sortie des générateurs de fenêtres de temps et une seconde série d'entrées recevant respectivement, pour la première porte logique, le signal de sortie des moyens optoélectroniques de lecture et pour la seconde porte logique, le signal inverse.

11. Dispositif selon la revendication 10, caractérisé en ce que les moyens de détermination de déphasage (3) comprennent en outre un premier circuit (30) de numérisation des signaux de sorties desdites portes logiques en deux mots binaires (A, B) représentatifs et un circuit d'interpolation (31) générant à partir de ces deux mots binaires, un mot binaire de commande (C) des moyens de remise en phase (5).

12. Dispositif selon la revendication 11, caractérisé en ce que les moyens d'interpolation (30) sont constitués à partir d'une mémoire à lecture seule programmable.

13. Dispositif selon la revendication 12, caractérisé en ce que les moyens de remise en phase (5) comprennent des circuits de mémorisation (510, 520) dudit signal de commande (C) entre deux determinations successives, des moyens de regénération (51, 52) des signaux de synchronisation (H$_{S1}$, H$_{S2}$) à partir desdits signaux d'horloge (H) et des moyens de sélection conditionnelle (53 - 56) d'un signal (H$_{S2}$) de synchronisation regénéré sous la commande dudit mot binaire de commande nouvellement déterminé (C).

14. Dispositif selon la revendication 13, caractérisé en ce que lesdits moyens de sélection conditionnelle comprennent un élément bistable (56) initialisé par une transition d'un sens déterminé des signaux de synchronisation (H$_{S2}$) nouvellement regénérés.

## Patentansprüche

1. Verfahren zur Regenerierung von Synchronisationssignalen (H$_S$) in einem optischen Aufzeichnungs-Wiedergabegerät für auf einem gleichmäßig bewegten Träger (90) aufgebrachte digitale Informationsdaten, die in Gestalt von Störstellen (92) in mindestens einer optisch erkennbaren Schicht des Trägermaterials entlang von Spuren (91) bestimmter Ausbildung aufgezeichnet sind, wobei das Gerät Mittel zur Fokussierung eines Lichtenergiestrahls (f) als Abtastfleck (t$_a$) auf eine der Spuren und opoelektronische Mittel (1) zur Erfassung der Wechselwirkung dieses Strahls mit den unter dem Abtastfleck durchlaufenden Störstellen aufweist, dadurch gekennzeichnet, daß das Verfahren aufweist:

- eine Vorphase, bestehend aus der Einschreibung spezifischer digitaler Daten (92) in Gestalt von einer selektiv durch die optoelektronische Erfassungsmittel (1, 2) identifizierbaren Folge von Störstellen der Materialschicht an bestimmten Flatzen der Spuren
- und eine Phase der Regenerierung der Synchronisationssignale, mit folgenden Stufen:
. Erzeugung eines periodischen Taktsignals fester Frequenz (H) außerhalb des Trägers;
. selektive Identifikation der spezifischen digitalen Daten durch die optoelektronischen Erfassungsmittel;
. Bestimmung des Zeitpunkts (T$_C$), an dem das Zentrum einer der die spezifischen digitalen Daten bildenden Störstellen mit einer durch das Zentrum (O) des Abtastflecks gehenden,

orthogonal zur mittleren Richtung der abgetasteten Spur (91) verlaufenden Achse zusammentrifft,

. Bestimmung der Amplitude und des vorzeichens der Abweichung dieses Zeitpunkts im Vergleich zu einem Bezugszeitpunkt der Periode des Taktsignals (H);

. und Erzeugung eines Synchronisationssignals (H$_S$) der gleichen Frequenz wie die des Taktsignals, mit einer der Amplitude und dem Vorzeichen der genannten Abweichungen direkt proportionalen Phasenverschiebung.

2. Verfahren nach Anspruch 1, dadurch gekennzeichnet, daß die aufzuzeichnenden digitalen Daten binäre, entsprechend den Regeln des N.R.Z.-Kodes verschlüsselte Impulse sind, und daß, da die genannten Impulse eine Dauer besitzen, die ohne Ausnahme einem festgelegten Grundwert T oder einem ganzzahligen Vielfachen dieses Wertes gleich sind, die spezifischen digitalen Daten aus einer Folge von Impulsen (Fig. 4) bestehen, deren Dauer das Einundeinhalbfache dieses Wertes beträgt und die durch Zeitintervalle getrennt sind, die diesem Wert T entsprechen, so daß sie die selektive Identifikationsstufe auszuführen erlauben.

3. Verfahren nach Anspruch 2, dadurch gekennzeichnet, daß die Stufe der Bestimmung des Zusammentreff-Zeitpunkts durch die Erfassung des Zeitpunktes des Auftretens aufeinanderfolgender Übergänge (T$_A$, T$_B$) entgegengesetzter Richtungen eines der spezifischen digitalen Datenimpulse, und durch Berechnung des Mittelwertes (T$_C$) zwischen diesen beiden Zeitpunkten erfolgt.

4. Verfahren nach Anspruch 2, dadurch gekennzeichnet, daß die Stufen der Identifikation und der Bestimmung des Zusammentreff-Zeitpunkts zu einer einzigen Stufe zusammengefaßt werden und daß eine doppelte Erfassung des Zeitpunkts des Auftretens zweier auf einanderfolgender Übergänge in einer ersten Richtung und zweier aufeinanderfolgender Übergänge in einer zweiten Richtung durch die Erzeugung erster (V$_{FA}$) und zweiter (V$_{FB}$) Zeitfenster erfolgt, welche durch die ersten Übergänge der ersten und zweiten Richtung initialisiert und um ein Zeitintervall verzögert werden, das das Einundeinhalbfache des festgelegten Grundwerts T beträgt, daß zwei Impulse (V$_{SA}$, V$_{SB}$) synchron mit den zweiten Übergängen der ersten und zweiten Richtung erzeugt werden, wobei die Erzeugung bedingt ist durch das Zusammentreffen des Auftretens der Übergänge innerhalb der genannten Zeitfenster, und daß die Bestimmung des Zusammentreff-Zeitpunktes aus der Berechnung des Mittelwertes (T$_C$) der Zeitpunkte (T$_A$, T$_B$) des Auftretens dieser beiden Impulse erfolgt.

5. Verfahren nach einem beliebigen der Ansprüche 1 bis 4, dadurch gekennzeichnet, daß bei einem Synchronisationssignal (H$_S$) in Form, eines Impulssignals die Stufe der Regenerierung des Synchronisationssignals durch die Erzeugung eines neuen Synchronisationssignals (H$_{S2}$) bei jeder neuen Regenerierungsphase, das eine nach Amplitude und Vorzeichen zur neuen, während dieser Phase festgelegten Phasenverschiebung direkt proportionale Phasenverschiebung besitzt, und durch Substitution gegen das Synchronisationssignal (H$_{S1}$) erfolgt, welches während der vorhergehenden Phase synchron mit dem Zeitpunkt (T$_4$) des Auftretens des nächsten Obergangs festgelegter Richtung der genannten Impulse des neuen Synchronisationssignals (H$_{S2}$) erzeugt wurde.

6. Verfahren nach einem beliebigen der Ansprüche 1 bis 5, dadurch gekennzeichnet, daß die Einschreibung der spezifischen digitalen Daten während der Vorphase vor der Einschreibung jeglicher digitaler Informationsdaten auf den Träger erfolgt, und daß die regenerierten Synchronisationssignale (H$_S$) in nachfolgenden Phasen zum synchronisierten Einschreiben und Lesen der digitalen Informationsdaten benutzt werden.

7. Verfahren nach einem beliebigen der Ansprüche 1 bis 5, dadurch gekennzeichnet, daß die Einschreibung der spezifischen digitalen Daten während der Vorphase im Zeitmultiplex mit der Einschreibung der digitalen Informationsdaten erfolgt und daß die regenerierten Synchronisationssignale (H$_S$) in nachfolgenden Phasen zum synchronisierten Lesen dieser Information benutzt werden.

8. Verfahren nach einem beliebigen der Ansprüche 1 bis 7, dadurch gekennzeichnet, daß die spezifischen digitalen Daten an Plätzen (92) eingeschrieben werden, die regelmäßig entlang der Spuren (91) verteilt sind, wobei Blöcke zwischen den Plätzen für die Einschreibung der digitalen Informationsdaten definiert sind.

9. Anordnung zur Regenerierung von Synchronisationssignalen nach einem beliebigen der Ansprüche 1 bis 8, mit Mitteln (54) zur Erzeugung von Synchronisationssignalen, von einem periodischen Bezugssignal und von Taktsignalen außerhalb des Trägers, mit denen die Synchronisationssignale erzeugt werden, und mindestens mit optoelektronischen Mitteln zum Lesen eines Informationsträgers (90) auf dem entlang der Spur (91) sowohl digitale Informationsdaten, welche aus Impulsen (92) von einer Dauer bestehen, die einem festgelegten Zeitintervall T oder einem ganzen Vielfachen dieses Intervalls entsprechen, als auch spezifische digitale Daten aufgezeichnet werden, deren Dauer das Einundeinhalbfache der Dauer T beträgt und die voneinander durch Zeitintervalle dieser Dauer getrennt sind, dadurch gekennzeichnet, daß die Mittel (2) zur selektiven Erfassung der spezifischen Impulse, Mittel zur Bestimmung der Phasenverschiebung (3) der Mitte eines der Impulse, welche die spezifischen Daten bilden, durch Vergleich mit einem Bezugszeitpunkt der Periode des Taktsignals (H), unter Erzeugung eines für das Vorzeichen und die Amplitude der Phasenverschiebung kennzeichnenden Steuersignals (C) und Mittel (5) zur Wiederherstellung der Phasenlage der Taktsignale (H) aufweist, so daß die Synchronisationssignale ($H_S$) regeneriert werden.

10. Anordnung nach Anspruch 9, dadurch gekennzeichnet, daß bei spezifischen digitalen Daten (Fig. 4) mit mindestens zwei Impulsen, die Mittel (2) zur selektiven Erfassung der spezifischen digitalen Daten und die Mittel (3) zur Bestimmung der Phasenverschiebung gemeinsam einen doppelten Detektor zur Erfassung der Übergänge dieser Impulse aufweisen, welcher die Ausgangssignale ($V_L$) der optoelektronischen Lesemittel empfängt und aufweist: ein logisches Element (25) zur Umkehrung der Signale, einen ersten Generator (21) zur Erzeugung eines Zeitfensters ($V_{FA}$), der durch den ersten Übergang einer ersten Richtung der die spezifischen digitalen Daten bildenden Impulse angestoßen wird, wobei der Übergang um ein Zeitintervall verzögert wird, welches das Einundeinhalbfache der Grundzeit T beträgt; einen zweiten Generator (22) zur Erzeugung von Zeitfenstern ($V_{FB}$), der durch den ersten Übergang mit umgekehrter Richtung der die spezifischen digitalen Daten bildenden Impulse angestoßen wird, wobei dieser Übergang um dasselbe Zeitintervall verzögert wird; ein erstes (23) und ein zweites logisches UND-Tor (24), welche über eine erste Reihe von Eingängen die Ausgangssignale der Zeitfenstergeneratoren und über eine zweite Reihe von Eingängen im Fall des ersten logischen Tors das Ausgangssignal der optoelektronischen Lesemittel und im Fall des zweiten logischen Tors das umgekehrte Signal empfangen.

11. Anordnung nach Anspruch 10, dadurch gekennzeichnet, daß die Mittel (3) zur Bestimmung der Phasenverschiebung weiter einen ersten Kreis (30) zur Digitalisierung der Ausgangssignale der logischen Tore in Form von zwei repräsentativen Binärwörtern (A, B) und einen Interpolationskreis (31) aufweisen, der aus den beiden Binärwörtern ein binäres Befehlswort (C) für die Mittel zur Wiederherstellung der Phasenlage (5) erzeugt.

12. Anordnung nach Anspruch 11, dadurch gekennzeichnet; daß die Interpolationsmittel (30) aus einem programmierbaren Festwertspeicher gebildet sind.

13. Anordnung nach Anspruch 12, dadurch gekennzeichnet, daß die Mittel (5) zur Wiederherstellung der Phasenlage Speicherkreise (510, 520) for das Befehlssignal (C) zwischen zwei aufeinanderfolgenden Erfassungen, Regeneriermittel (51, 52) für die Synchronisationssignale ($H_{S1}$, $H_{S2}$) aus den Taktsignalen (H) und Mittel (53 - 56) zur bedingten Auswahl eines Synchronisationssignals ($H_{S2}$) aufweisen, wobei letzteres unter Steuerung durch das binäre, neu bestimmte Befehlswort (C) regeneriert wird.

14. Anordnung nach Anspruch 13, dadurch gekennzeichnet, daß die Mittel zur bedingten Auswahl eine bistabilen Kippstufe (56) aufweisen, die durch einen Übergang der neu regenerierten Synchronisationssignale ($H_{S2}$) in einer festgelegten Richtung initialisiert wird.

## Claims

1. A method for regenerating synchronizing signals ($H_S$) in an optical apparatus for recording and reproducing digital information data on a support (90) subjected to a uniform movement; said data being recorded in the form of perturbations (92) of at least one material layer of the support which is optically readable along tracks (91) having a predetermined configuration; said apparatus comprising means for focussing a light energy beam (f) to a scanning spot ($t_a$) on one of said tracks and optoelectronic means (1) for detecting the interaction of this beam with said perturbations, which pass along under the scanning spot; characterized in that it comprises:

- a preliminaery phase consisting of recording specific digital data (92) by way of a sequence of perturbations of said material layer at predetermined places of said tracks adapted to be selectively identified by means of the optoelectronic detection means (1, 2);
- and a regeneration phase of said synchronizing signals, comprising the following steps:
. generation of a periodic clock signal (H) having a fixed frequency, outside of the support;
. selective identification of the specific digital data by the optoelectronic detection means;
. determination of the instant ($T_C$) of intersection of the centre of one of said perturbations composing the specific digital data with an axis passing through the centre (O) of the scanning spot and disposed orthogonally to the mean direction of the scanned track (91);
. determination of the amplitude and sign of the shift of this instant compared to a reference instant of the the clock signal (H) period;
. and generation of a synchronizing signal ($H_S$) having the same frequency as the clock signal and presenting a phase shift which is directly proportional to said shifts in amplitude and sign.

2. A method according to claim 1, characterized in that the digital data to be recorded are binary pulses encoded in conformity with the rules of the N.R.Z. code, and that, said pulses having durations which are exclusively equal to a predetermined basic value T or to a multiple integer of that value, the specific digital data are constituted by a sequence of pulses (fig. 4) having a duration equal to one and a half of that value and being spaced by time intervals equal to that value T, such as to allow for the selective identification step to be performed.

3. A method according to claim 2, characterized in that the step of determining the intersection instant is performed by detecting the instant of occurrence of successive transitions ($T_A$, $T_B$) of opposite directions of one of the specific digital data pulses, and by computing the mean value

(T$_C$) of those two instants.

4. A method according to claim 2, characterized in that the steps of identification and determination of the intersection instant are merged to form a sole step, and that a double detection of the instant of occurrence of two successive transitions having a first direction and of two successive transitions having a second direction is performed by the generation of first (V$_{FA}$) and second (V$_{FB}$) time windows, which are initialized by the first transition of first and second directions and delayed by a time interval equal to one and a half of said predetermined basic value T; that two pulses (V$_{SA}$, V$_{SB}$) are generated in synchronism with the second transitions of first and second directions, wherein the generation is conditioned by the coincidence of occurrence of transitions within said time windows; and that the instant of intersection is determined using the computation of the mean value (T$_C$) of the instants (T$_A$, T$_B$) of occurrence of these two pulses.

5. A method according to any one of the claims 1 to 4, characterized in that, the synchronizing signal (H$_S$) being of the pulse type, the step regenerating the synchronizing signal is performed by generating a new synchronizing signal (H$_{S2}$) at each new regeneration phase presenting a phase shift that is directly proportional in amplitude and sign to the new predetermined shift during that phase, and by substituting the latter for the synchronizing signal (H$_{S1}$) generated during the preceding phase in synchronism with the instant (T$_4$) of occurrence of the next transition of predetermined direction of said pulses of the new synchronizing signal (H$_{S2}$).

6. A method according to any one of claims 1 to 5, characterized in that the writing of the specific digital data during the preliminary phase is performed prior to the recording of any digital information data on the support, and that said regenerated synchronizing signals (H$_S$) are used in later phases for synchronizing recording and reading of these digital information data.

7. A method according to any one of claims 1 to 5, characterized in that during the preliminary phase the writing of the specific digital data is time-multiplexed with the recording of the digital information data, and that said regenerated synchronizing signals (H$_S$) are used in later phases for the synchronized reading of these informations.

8. A method according to any one of claims 1 to 7, characterized in that said specific data are written at places (92) regularly spaced along the tracks (91) defining between these places blocks attributed to the recording of the digital information data.

9. A device for the regeneration of synchronizing signals according to any one of claims 1 to 8, comprising: means (4) for generating, outside of the support, synchronizing signals, a periodic reference signal and clock signals from which said synchronizing signals are derived; and at least optoelectronic means for reading from an information support (90), on which are recorded along the tracks (91) the digital information data composed of pulses (92) of a duration equal to predetermined time interval T or a multiple integer of that interval, as well as the specific digital data of a duration equal to one and a half times the duration T and separated by time intervals equal to that duration, characterized in that the device comprises means (2) for the selective detection of said specific pulses; means (3) for determining the phase shift of the centre of one of the pulses composing the specific data, as compared to an reference instant of the period of said clock signal (H), generating a control signal (C) representative of the sign and the amplitude of the phase shift; and means (5) for restoring the phase relation of the clock signals (H) so as to regenerate said synchronizing signals (H$_S$).

10. A device according to claim 9, characterized in that, the specific digital data (Fig. 4) comprising at least two pulses, the means (2) for selectively detecting the specific digital data and the means (3) for determining the phase shift comprise in common a double detector for sensing the transitions of these pulses, this detector receiving the output signals (V$_L$) of said optoelectronic reading means and comprising a logic element (25) inverting said signals; a first time window (V$_{FA}$) generator (21) initialized by the first transition of said pulses composing the specific digital data having a first direction and delayed by a time interval equal to one and a half times said predetermined basic duration (T); a second time window (V$_{FB}$) generator (22) initialized by the first transition having an inverted direction of said pulses composing the specific digital data and delayed by the same time invertal; first (23) and second (24) logic AND gates receiving through a first series of inputs the output signals of the time window generators and through a second series of inputs of the first logic gate the output signal of the optoelectronic reading means, and through a second series of inputs of the second logic gate the inverted signal.

11. A device according to claim 10, characterized in that the means (3) for determining the phase shift further comprise a first circuit (30) for converting the output signals of said logic gates into two representative binary words (A, B), and an interpolation circuit (31) generating, by using those binary words, a binary word (C) for controlling the phase restoration means (5).

12. A device according to claim 11, characterized in that the interpolation means (30) are mainly constituted by a programmable read-only memory.

13. A device according to claim 12, characterized in that the phase restoration means (5) comprise circuits (510, 520) for storing said control signal (C) between two successive determinations; means (51, 52) for regenerating the synchronizing signals (H$_{S1}$, H$_{S2}$) by using said clock signals (H); and means for a conditioned selection (53 - 56) of a regenerated synchronizing signal (H$_{S2}$) under the control of said newly determined binary control word (C).

14. A device according to claim 13, characterized in that said means for conditioned selection comprise a bistable element (56) initialized by a transition having a predetermined direction of the newly regenerated synchronizing signals.

13

# FIG.1

# FIG.2

# FIG.3

# FIG.4

1

# FIG.5

# FIG.6

# FIG.7

REMISE EN PHASE

FIG. 8

FIG.9